(19) Europäisches Patentamt
European Patent Office
Office européen des brevets

(11) EP 2 511 891 A1

(12) **EUROPEAN PATENT APPLICATION**
published in accordance with Art. 153(4) EPC

(43) Date of publication:
**17.10.2012 Bulletin 2012/42**

(21) Application number: **10836096.7**

(22) Date of filing: **13.12.2010**

(51) Int Cl.:
***G08G 1/00*** *(2006.01)* ***B60K 28/10*** *(2006.01)*
***G07C 5/00*** *(2006.01)* ***G08G 1/16*** *(2006.01)*

(86) International application number:
**PCT/JP2010/072352**

(87) International publication number:
**WO 2011/071177 (16.06.2011 Gazette 2011/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2009 JP 2009281245**

(71) Applicant: **Optex Co., Ltd.**
**Shiga 520-0101 (JP)**

(72) Inventors:
- **MIZUTA, Takahiro**
**Otsu-shi**
**Shiga 520-0101 (JP)**
- **ICHIEN, Kenji**
**Otsu-shi**
**Shiga 520-0101 (JP)**
- **OKABE, Junichiro**
**Otsu-shi**
**Shiga 520-0101 (JP)**
- **KAGEYAMA, Naoki**
**Otsu-shi**
**Shiga 520-0101 (JP)**

(74) Representative: **Vossius & Partner**
**Siebertstrasse 4**
**81675 München (DE)**

(54) **DRIVING BEHAVIOR DETECTING METHOD AND DEVICE**

(57) The present invention includes a driving behavior detecting unit (3) mounted on an automotive vehicle (A) and having at least an accelerator sensor (2) and is operable to detect the driving behavior on the basis of the acceleration of the automotive vehicle A detected by the acceleration sensor (2), in which a setting cant state detecting unit (11) automatically detects, on the basis of the frequency of occurrence of the acceleration at a plurality of angles of inclination on a plane containing a predetermined axis of the automotive vehicle (A) and a predetermined axis of the driving behavior detecting unit (3) installed so as to incline relative to this predetermined axis, at least the angle of inclination of an anteroposterior axis of the driving behavior detecting unit (3) installed relative to the anteroposterior axis of the automotive vehicle (A) is automatically detected.

Fig. 1

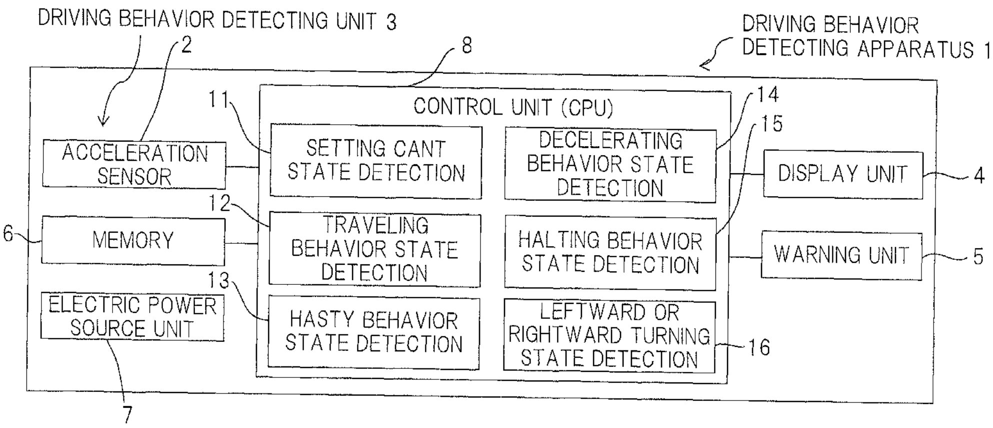


EP 2 511 891 A1

**Description**

CROSS REFERENCE TO THE RELATED APPLICATION

This application is based on and claims Convention priority to Japanese patent application No. 2009-281245, filed December 11, 2009, the entire disclosure of which is herein incorporated by reference as a part of this application.

BACKGROUND OF THE INVENTION

(Field of the Invention)

The present invention relates to a method of and an apparatus for detecting a driving behavioral characteristic from the driving inclination of an automobile driver then driving an automotive vehicle.

(Description of Related Art)

The driving behavior detecting apparatus has hitherto been known, which is utilized to analyze the driving inclination of the automobile driver, then driving the automotive vehicle, and/or to make a recording of traffic incidents with the use of a digital tachograph and/or a drive recorder mounted on the automotive vehicle.

Taxi companies utilizing a number of cars for business use are required to stipulate the specific control standards including, for example, the employment of a safety operating manager and/or the periodic implementation of aptitude diagnosis and, in recent years, even general industries using a substantial number of company owned automotive vehicles are required to commit the employment of a safety operating manager and/or the periodic implementation of safety driving guidance. Thus, the necessity of raising the consciousness for the safety driving is increasing in recent years.

As one example of the conventional driving behavior detecting apparatus, the apparatus has been well known, in which a drive recorder is used to detect data representative of the driving inclination of a vehicle driver then driving an automotive vehicle and, based on those data, the driving inclination of the vehicle driver is analyzed. In this respect, see, for example, the patent documents 1 and 2 listed below.

In the driving behavior detecting apparatus in general, an acceleration sensor for detecting the acceleration of the automotive vehicle, a GPS sensor for detecting the position of the automotive vehicle and/or an imaging device for imaging an operating state of the automotive vehicle are mounted on the automotive vehicle and detection data on the driving inclination are detected by those devices. Thereafter, by a manager stationed at, for example, a driving control center, the driving inclination is subjectively analyzed on the basis of detection data such as, for example, detected acceleration data, which may represent hasty behaviors (generally known as "traffic incidents"), and/or contextual image data recorded of those hasty behaviors with the aid of a personal computer (PC) or the like.

[Prior Art Literature]

[Patent Document 1] Japanese Patent No. 3044025
[Patent Document 2] Japanese Patent No. 3229297

DISCLOSURE OF THE INVENTION

It has, however, been found that most of the conventional apparatuses are so designed and so configured that if the acceleration representative of one of the driving behaviors is higher than a predetermined value, such higher acceleration is uniformly judged as a dangerous behavior, and reference only to the acceleration data is insufficient. Therefore, reference has also been made to data acquired from other sensors and/or to contextual images recorded of the driving behavior before the final decision as to whether or not it is a hazardous behavior is made. As a result, the problem has hitherto been recognized in that a substantial amount of time is incurred in determining the driving behavior in question.

Also, the conventional apparatus requires the use of, in addition to the acceleration sensor, the various sensors referred to above and the imaging device and is therefore expensive. Accordingly, as apparatus for use primarily in detecting the driving behavior, an expensive alternative and a simplified construction have been desired for.

In view of the foregoing, the present invention has been devised to substantially eliminate the above discussed problems and inconveniences inherent in the prior art apparatuses and is intended to provide a method of and a simplified device for detecting various driving behaviors, exhibited by a vehicle driver, so that determination of whether is good or bad can be accomplished easily.

In order to accomplish the object of the present invention referred to above, out of the driving behave detecting method and apparatus provided according to a first design of the present invention, the driving behavior detecting method (according to the first design of the present invention) referred to above includes a driving behavior detecting unit, mounted on an automotive vehicle and having at least an acceleration sensor, for detecting a driving behavior on the basis of an acceleration of the automotive vehicle detected by the acceleration sensor, in which method on the basis of the frequency of occurrence of the acceleration at a plurality of angles of inclination on a plane containing a predetermined axis of the automotive vehicle and a predetermined axis of the driving behavior detecting unit installed so as to incline relative to this predetermined axis, at least the angle of inclination of an anteroposterior axis of the driving behavior detecting unit installed relative to the anteroposterior axis of the automotive vehicle is automatically detected.

The driving behavior detecting apparatus (according to the first design of the present invention) referred to above includes a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which apparatus the control unit includes a setting cant state detecting unit for automatically detecting, on the basis of the frequency of occurrence of the acceleration at a plurality of angles of inclination on a plane containing a predetermined axis of the automotive vehicle and a predetermined axis of the driving behavior detecting unit installed so as to incline relative to this predetermined axis, at least the angle of inclination of an anteroposterior axis of the driving behavior detecting unit installed relative to the anteroposterior axis of the automotive vehicle.

According to the first design of the present invention referred to above, since even though the driving behavior detecting apparatus including the driving behavior detecting unit mounted on the automotive vehicle is installed having been inclined relative to the predetermined axis of the automotive vehicle, for example, the anteroposterior axis, the state of inclination thereof is automatically detected on the basis of the detection of the acceleration of the automotive vehicle, accurate data on the driving behavior can be acquired with a simplified construction. Also, there is no need to coincide the predetermined axis of the driving behavior detecting apparatus relative to the predetermined axis of the automotive vehicle and, hence, with a simplified construction, the degree of freedom of installation of the driving behavior detecting apparatus, including the driving behavior detecting unit, in the automotive vehicle can be increased.

Preferably, by detecting the direction of advance of the automotive vehicle the number of times by means of the acceleration sensor, the direction of advance of the automotive vehicle is automatically detected on the basis of the detection angle of the driving behavior detecting unit and the number of times the detection has been made by the acceleration sensor. Accordingly, since the direction of advance of the automotive vehicle is detected merely through the detection by the acceleration sensor, more accurate data on the driving behavior can be acquired.

Out of the driving behave detecting method and apparatus provided according to a second design of the present invention, the driving behavior detecting method (according to the second design of the present invention) includes a driving behavior detecting unit, mounted on an automotive vehicle and having at least an acceleration sensor, for detecting a driving behavior on the basis of an acceleration of the automotive vehicle detected by the acceleration sensor, in which method on the basis of the magnitude of a vibrating state, detected by the acceleration sensor, and the magnitude of a vibrating state before and after a braking operation, a driving behavior state of halt, deceleration, advance and acceleration of the automotive vehicle is detected.

The driving behavior detecting apparatus (according to the second design of the present invention) includes a driving behavior detecting unit, mounted on an automotive vehicle and having at least an acceleration sensor for detecting the acceleration of the automotive vehicle, a display unit, an electric power source unit, and a control unit for detecting the driving behavior on the basis of the acceleration of the automotive vehicle detected by the acceleration sensor, in which apparatus the control unit includes a traveling behavior state detecting unit for detecting a driving behavior state of halt, deceleration, advance and acceleration of the automotive vehicle is detected, on the basis of the magnitude of a vibrating state, detected by the acceleration sensor, and the magnitude of a vibrating state before and after a braking operation.

According to the second design of the present invention, merely by the detection made by the acceleration sensor, the traveling behavior state of halt, deceleration, advance and acceleration of the automotive vehicle can be detected and, since the necessity of use of various sensors such as required in the prior art can be dispensed with, the structure can be simplified and the cost can be reduced.

Preferably, when the vibrating state continues at a value lower than a predetermined value or when a low vibrating state establishes after the braking operation from a high vibrating state, the halt of the automotive vehicle is detected. Accordingly, the halting behavior state of the automobile vehicle, with has hitherto been difficult to achieve only with the acceleration sensor, can be accurately detected.

Out of the driving behave detecting method and apparatus provided according to a third design of the present invention, the driving behavior detecting method (according to the third design of the present invention) includes a driving behavior detecting unit, mounted on an automotive vehicle and having at least an acceleration sensor, for detecting a driving behavior on the basis of an acceleration of the automotive vehicle detected by the acceleration sensor, in which method the interval of time of occurrence of an abrupt operation detected by the acceleration sensor and, based on the abrupt operation occurring time interval so detected, an abrupt behavior state is detected from the amount of change in a difference between an average abrupt operation occurring time interval for a long term and an average abrupt operation occurring time interval for a recent short term.

The driving behavior detecting apparatus (according to the third design of the present invention) includes a driving behavior detecting unit, which is mounted on an automotive vehicle and includes an acceleration sensor for detecting at least an acceleration of the automotive vehicle, a display unit, an electric power source unit, and a control unit for detecting the driving behavior on the basis of the acceleration of the automotive vehicle detected by the acceleration sensor, in which apparatus the control unit includes a hasty behavior state detecting unit for measuring the interval of time of occurrence of an abrupt operation, detected by the acceleration sensor, and on the basis of the abrupt operation occurring time interval so detected, for detecting a hasty behavior state from the amount of change in a difference between an average abrupt operation occurring time interval for a long term and an average abrupt operation occurring time interval for a recent short term.

According to the third design of the present invention, by detecting the hasty behavior state merely through the detection by the accelerator sensor, it is possible to avoid an accident or an incident by warning and/or displaying that the possibility of occurrence of the accident is high.

Out of the driving behave detecting method and apparatus provided according to a fourth design of the present invention, the driving behavior detecting method (the fourth design of the present invention) includes a driving behavior detecting unit, mounted on an automotive vehicle and having at least an acceleration sensor, for detecting a driving behavior on the basis of an acceleration of the automotive vehicle detected by the acceleration sensor, in which method on the basis of a time distribution of acceleration in a decelerating behavior, which is one of the driving behaviors and by which the automotive vehicle is decelerated, the decelerating behavior state is detected as classified into a predicated deceleration type, an anticipated circumvention type, a determination miscalculation type and an emergency deceleration type in dependence on the presence or absence of a predication or the degree of emergency.

The driving behavior detecting apparatus (according to the fourth design of the present invention) includes a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which apparatus the control unit includes a decelerating behavior state detecting unit for detecting, on the basis of a time distribution of acceleration in a decelerating behavior, which is one of the driving behaviors and by which the automotive vehicle is decelerated, the decelerating behavior state as classified into a predicated deceleration type, an anticipated circumvention type, a determination miscalculation type and an emergency deceleration type in dependence on the presence or absence of a predication or the degree of emergency.

According to the fourth design of the present invention, since merely through the detection made by the acceleration sensor, the decelerating behavior state can be classified into the predicated deceleration type, the anticipated circumvention type, the determination miscalculation type and the emergency deceleration type in detail, the determination of whether is good or bad can be easily made and a proper driving guidance can be given with a simplified structure.

Preferably, by extracting a feature of each waveform representing the time distribution of the acceleration from an acceleration value and a position of the center of gravity of the waveform in the waveform, the decelerating behavior is classified and then detected. Accordingly, the determination of whether is good or bad can be easily made.

Out of the driving behave detecting method and apparatus provided according to a fifth design of the present invention, the driving behavior detecting method (the fifth design of the present invention) includes a driving behavior detecting unit, mounted on an automotive vehicle and having at least an acceleration sensor, for detecting a driving behavior on the basis of an acceleration of the automotive vehicle detected by the acceleration sensor, in which method on the basis of the comparison between a deceleration time required during the deceleration detected by the acceleration sensor and a plurality of deceleration time range preset in dependence on the deceleration initiating speed, a halting behavior is detected.

The driving behavior detecting apparatus (according to the fifth design of the present invention) includes a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which apparatus the control unit includes a halting behavior state detecting unit for detecting a halting behavior state on the basis of the comparison between a deceleration time required during the deceleration detected by the acceleration sensor and a plurality of deceleration time range preset in dependence on the deceleration initiating speed.

According to the fifth design of the present invention, since merely through the detection by the acceleration sensor, whether is good or bad of the halting behavior state during the deceleration is detected, the vehicle driver can secure, on a real time basis, a proper time required to halt the automotive vehicle and, therefore, a proper driving guidance can be given with a simplified structure.

Out of the driving behave detecting method and apparatus provided according to a sixth design of the present invention, the driving behavior detecting method (the sixth design of the present invention) includes a driving behavior detecting unit, mounted on an automotive vehicle and having at least an acceleration sensor, for detecting a driving behavior on the basis of an acceleration of the automotive vehicle detected by the acceleration sensor, in which method the radius of curvature of a road is detected on the basis of the acceleration from the acceleration sensor and the speed of the automotive vehicle and a leftward or rightward turning behavior state is detected on the basis of an actual approaching speed relative to a proper approaching speed dependent on the radius of curvature of the road.

The driving behavior detecting apparatus (according to the sixth design of the present invention) includes a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which apparatus the control unit includes a leftward or rightward turning behavior state detecting unit for detecting the radius of curvature of a road on the basis of the acceleration from the acceleration sensor and the speed of the automotive vehicle and for detecting a leftward or rightward turning behavior state on the basis of an actual approaching speed relative to a proper approaching speed dependent on the radius of curvature of the road.

According to the sixth design of the present invention, since merely through the detection of the acceleration and the detection of the speed, both made by the acceleration sensor, the leftward or rightward turning state is detected, with a simplified structure it is possible to enhance, on an real time basis, the driver's awareness of the importance of the safe driving during the curving.

Preferably, risk evaluation and assessment, including reduction and calculation, for a damage insurance may be carried out on the basis of detection of the traveling behavior state, the decelerating behavior state, the halting behavior state and/or the leftward or rightward turning behavior state so obtained. In this case, by the accurate detection of the behavior of an individual driver, a reasonable and valid risk assessment can be performed.

Thus, as hereinabove described, the present invention makes it possible to detect the various driving behaviors with a simplified structure by means of the detection made by the accelerator sensor, thus facilitating the determination of whether is good or bad thereof.

## BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 is a schematic structural diagram showing a driving behavior detecting apparatus designed in accordance with a preferred embodiment of the present invention;
Fig. 2 is a schematic top plan view showing one example of the angle of inclination between an automotive vehicle and the driving behavior detecting apparatus;
Fig. 3 is a characteristic chart showing the operation of a setting cant state detecting unit shown in Fig. 1;
Figs. 4A to 4F are characteristic charts showing various oscillating states of an automotive vehicle;
Fig. 5 is a flowchart showing the sequence of operation of a traveling behavior state detecting unit;
Figs. 6A to 6E are characteristic charts showing one example of operation of a hasty behavior state detecting unit shown in Fig. 1;
Fig. 7 is a characteristic chart showing the classification of decelerating behavior states;
Fig. 8 is a flowchart showing the sequence of operation of a decelerating behavior state detecting unit shown in Fig. 1;
Fig. 9 is a characteristic chart showing the operation of a halting behavior state detecting unit shown in Fig. 1;
Fig. 10 is a characteristic chart showing the halting behavior detection; and
Fig. 11 is a characteristic chart showing the operation of a leftward or rightward turning behavior state detecting unit.

## DESCRIPTION OF PREFERRED EMBODIMENTS

Hereinafter, one preferred embodiment of the present invention will be described in detail with particular reference to the accompanying drawings. In particular, Fig. 1 illustrates, in a schematic structural diagram, a driving behavior detecting apparatus designed in accordance with the preferred embodiment of the present invention. The apparatus, generally identified by 1 in Fig. 1 includes a driving behavior detecting unit 3 including an acceleration sensor 2 for detecting the acceleration of an automotive vehicle, a display unit 4, a warning unit 5, a memory 6, an electric power source unit 7 and a control unit (CPU) 8, all mounted on the automotive vehicle for detecting the driving behavior.

The acceleration sensor 2 is so designed as to acquire data (G display) on three axis acceleration acting in an anteroposterior direction, a bilateral direction and a vertical direction and is operable to the driving behavior and a particular one (hasty behavior) of the driving behavior such as, for example, abrupt braking, abrupt acceleration and abrupt steering.

The driving behavior detecting apparatus 1 has built therein the electric power source unit 7 such as, for example, a direct current power source (battery) and, accordingly, no wiring is needed to supply an electric power from the automotive vehicle and it can be installed at any arbitrary position inside the automotive vehicle as it is easy to install. The display unit 4 is operable to display a setting cant state as will be detailed later, a traveling behavior state, a hasty behavior state, a deceleration state, a halting behavior state and a leftward or rightward turning behavior state. The warning unit 5 is operable to issue to the vehicle drive a warning in the form of, for example, voiced messages, buzzer sounds and/or lighting in the event of, for example, the detection of the hasty behavior state and/or the detection of an emergency deceleration model included in the decelerating behavior state detection.

The control unit (CPU) 8 referred to above is operable to control the entire apparatus itself and includes a setting cant state detecting unit 11, a travelling behavior state detecting unit 12, a hasty behavior detecting unit 13, a decelerating behavior state detecting unit 14, a halting behavior state detecting unit 15 and a leftward or rightward turning behavior state detecting unit 16, all cooperating with each other to detect respective driving behavior states on the basis of the acceleration data acquired from the acceleration sensor 2.

The setting cant state detecting unit 11 shown in Fig. 1 is operable to automatically detect the state of the angle of inclination of an anteroposterior direction of the driving behavior detecting unit 3, which has been installed relative to at least an anteroposterior shaft of the automotive vehicle A, on the basis of the frequency of occurrence of the acceleration at a plurality of setting cants on a plane containing a predetermined axis of the automotive vehicle A and a predetermined axis of the driving behavior detecting unit 3 installed in a fashion inclined relative to such predetermined axis. The data so obtained are stored in the memory 6 and are then displayed on the display unit 4 during such driving. This is does not necessarily coincide with the predetermined axis of the automotive vehicle, for example, the anteroposterior axis of the driving behavior detecting apparatus because the driving behavior detecting apparatus has hitherto been installed at a site such as, for example, a dashboard, which is tilted, or at an angle sufficient for the driver of the automotive vehicle can easily view the display or the like. Also, consideration has been made during the installation of the driving behavior detecting apparatus 1 that it is inconvenient to install the driving behavior detecting apparatus at an initial setting by applying an arrow to a housing for the driving behavior detecting apparatus and then aligning the direction of installation with the anteroposterior axis of the automotive vehicle A. Even when the acceleration data are detected in a condition in which the anteroposterior axis of the automotive vehicle A is inclined relative to the anteroposterior axis of the installed driving behavior detecting apparatus 1, such acceleration data are inaccurate and any accurate driving behavior can be no longer determined.

As best shown in Fig. 2, installation is so made that, on the plane (plane of a page space) containing the anteroposterior direction O of the automotive vehicle A and the anteroposterior direction O1 of the driving behavior detecting apparatus 1 including the driving behavior detecting unit 3 installed in the manner described above and intersecting therewith, the anteroposterior direction O1 of the driving behavior detecting apparatus 1 may be inclined at an angle $\alpha$ relative to the anteroposterior direction O of the automotive vehicle A.

Fig. 3 is a characteristic chart showing the operation of the setting cant state detecting unit 11, in which the axis of abscissas represents the angle of mounting (inclination) of that anteroposterior axis which has been detected by the driving behavior detecting unit 3 including the acceleration sensor 2 inside the driving behavior detecting apparatus 1 and the axis of ordinate represents the frequency of detection of the acceleration exceeding a predetermined value. In this example, the anteroposterior axis of the housing for the driving behavior detecting apparatus 1 is originally inclined at an angle of 270° relative to the anteroposterior axis of the driving behavior detecting unit 3 including the acceleration sensor 2 within the driving behavior detecting apparatus 1 and, when the angle of inclination detected by the driving behavior detecting unit 3 is 270°, the anteroposterior axis O of the automotive vehicle A and the anteroposterior axis O1 of the driving behavior detecting apparatus 1 coincide with each other at an angle of inclination of $\alpha$=0.

The setting cant state detecting unit 11 shown in Fig. 3 detects the setting cant state of the automotive vehicle A from the detection of the acceleration during, for example, actual ten runs of the automotive vehicle. A plurality of acceleration data of the automotive vehicle A, which occur for a plurality of angles of installation on the plane (page space) containing the anteroposterior axis O of the automotive vehicle A, shown in Fig. 2, and the anteroposterior axis O1 of the driving behavior detecting apparatus 1 are detected during the travel of the automotive vehicle for a predetermined length of time. From the frequency of occurrence shown in Fig. 3, the angle of inclination of the driving behavior detecting unit 3 is detected as 270° and, in such case, the anteroposterior shaft O of the automotive vehicle A and the anteroposterior axis O1 of the driving behavior detecting apparatus 1 coincide substantially with each other and the angle of inclination thereof is hence substantially zero (0) degree.

Along therewith, anteroposterior and bilateral directions of the automotive vehicle A are determined in reference to waveforms of accelerations during the travel for the predetermined length of time and are then automatically determined. By way of example, the start of the automotive vehicle after the vehicle halt is detected and the anteroposterior traveling direction of the automotive vehicle A is then determined. Utilization is made that during ordinary travel, forward start occupies most proportions and rearward start is limited to parking and so on and occupies a little proportion. In the characteristic chart shown in Fig. 3, the direction of about 270°, at which the frequency of occurrence is highest, is determined as the forward start and the rearward start is determined lying in the direction of about 90°, at which the frequency of occurrence is rather low. It is to be noted that the direction of forward travel of the automotive vehicle A may be automatically detected on the basis of the measurement of the acceleration detected by the acceleration sensor 2 at the time of vehicle halt or an on-going change of the acceleration.

It is to be noted that of the acceleration data in predetermined three axes, bilateral axes can be detected in a manner similar to the anteroposterior axes described hereinbefore. Also, with respect to the vertical axes, they can be easily detected from a relation with the center of gravity of the automotive vehicle A.

Accordingly, acquisition of the accurate driving behavior data is made possible with a simplified structure since even through the driving behavior detecting apparatus 1 including the driving behavior detecting unit 3 mounted on the automotive vehicle A is installed having been inclined relative to the predetermined axis of the automotive vehicle A, for example, the anteroposterior axis, the angle of such inclination is automatically detected on the basis of only the detection made by the acceleration sensor 2 of the automotive vehicle A. Also, there is no need to align the predetermined axis of the driving behavior detecting apparatus 1 with the predetermined axis of the automotive vehicle and, hence, with a simplified structure, the degree of freedom of installation of the driving behavior detecting apparatus 1, including the driving behavior detecting unit 3, in the automotive vehicle A can be increased.

The traveling behavior state detecting unit 12 shown in Fig. 1 is operable to detect the traveling behavior states including vehicle halt, deceleration, start and acceleration on the basis of the magnitude of a vibrating state, detected by the acceleration sensor 2, and the magnitude of a vibrating state before and after acceleration and braking. Data so obtained are stored in the memory 6 and are subsequently displayed on the display unit 4. This is made in the light of the possibility of the structure becoming complicated since, in view of the fact that since the acceleration sensor 2 detects a relative acceleration change (differential waveform), a stable travel and the halt are similar and it is therefore difficult to accurately determine the halt only with the acceleration sensor 2, the need has hitherto been encountered to measure the velocity with the use of a velocity sensor such as, for example, a rotational pulse counter or GPS sensor.

Figs. 4A to 4F illustrate respective diagrams showing vibrating states of the automotive vehicle A in various behaviors. From those vibrating states of the automotive vehicle A, on the basis of the acceleration vibrating level before and after acceleration and braking, determination is made to ascertain if the automotive vehicle A is halted or travelling, and the following classification becomes possible only with the detection performed by the acceleration sensor 2.

Fig. 4A illustrates a vehicle halted state and Fig. 4B illustrates an acceleration stabilizing state during the travel of the automotive vehicle. Using them, behaviors represented respectively by Figs. 4C to 4F are detected. In the decelerating behavior during the travel of the automotive vehicle shown in Fig. 4C, a high vibrating state establish after the braking operation from the high vibrating state. No halt take place after the deceleration accomplished by braking and, hence, the automotive vehicle is in a travelling position. In the halting behavior during the traveling shown in Fig. 4D, a low vibrating state establishes after the braking operation from the low vibrating state. The automotive vehicle is halted after the deceleration performed by braking. Halt of the automotive vehicle is detected when the vibrating state shown in either Fig. 4D or Fig. 4A continues at a value lower than a predetermined value. In the accelerating behavior during the traveling shown in Fig. 4E, a high vibrating state establishes after the accelerating operation from the high vibrating state. The amplitude of the vibration before the acceleration performed by an accelerator and the amplitude of the vibration after the acceleration performed by the accelerator remain the same. In the starting behavior during the traveling shown in Fig. 4F, a high vibrating state establishes after the accelerating operation from the low vibrating state. The amplitude of the vibration before the acceleration performed by an accelerator and the amplitude of the vibration after the acceleration performed by the accelerator are such that the amplitude of the vibration after the acceleration performed by the accelerator is higher than the amplitude of the vibration before the acceleration performed by the accelerator.

Fig. 5 illustrates the flowchart showing the sequence of operation of the traveling behavior state detecting unit 12.

At the outset, the acceleration data are acquired at step S1. A change in acceleration differential value is monitored at step S2. The differential value D1 of an average change is calculated at step S3. At step 4, determination is made to see whether or not acceleration is effected. In the event that the acceleration is effected as determined at step S4, the change in acceleration differential value is monitored at step S5, followed by the calculation of a differential value D2 of an average change at step S6. Then at step S7, the differential values of the respective average changes are compared, and, in the event of $D1 \geq D2$, it is determined as an acceleration event at step S8, but in the event of $D1 < D2$, it is determined as a start event at step S9. If decision at step S4 determines that no acceleration take place, a decision is made at step S 10 to determine whether or not the braking takes place and, in the event of occurrence of the braking as determined at step S 10, a change in acceleration differential value is monitored at step S11, followed by the calculation of a differential value D3 of an average change at step S12. Thereafter, the differential values D1 and D3 of the average changes are compared at step S 13 and, in the event of D1 ≤ D3, it is determined as a deceleration event at step S 14, but in the event of D1 > D3, it is determined as a halt event at step S15.

Accordingly, the traveling behavior state detecting unit 12 referred to above can detect the traveling behavior state such as halt, deceleration, start and acceleration of the automotive vehicle A merely by means of the detection accomplished by the acceleration sensor 2 and, therefore, the use of various sensors such as hitherto required can be dispensed with, making it possible to simplify the structure and also to reduce the cost.

The hasty behavior state detecting unit 13 shown in Fig. 1 and referred to previously detects an hasty behavior state from the quantity of change by measuring the interval of times of occurrence of hasty behaviors detected by the acceleration sensor 2 and then comparing, on the basis of this average abrupt operation occurring time interval, the average abrupt operation occurring time interval for a long term and the average abrupt operation occurring time interval for a recent short term with each other. Data so acquired are stored in the memory 6 and displayed on the display unit 4 during such operation. This is of a kind attributable to the fact that the hasty behavior, which is one of factors of the traffic accident, occurs when the vehicle driver then unaware of the difference with his or her usual driving skill because of his or her lack of patience in terms of time and/or psychology is incapable of taking an action thereagainst, and if the hasty behavior is detected and the vehicle driver becomes aware of the high possibility of a traffic accident, a traffic incident and/or accident can be avoided.

Figs. 6A to 6E illustrate one example of operation of the hasty behavior state detecting unit 13. Of those figures, Figs. 6A to 6C illustrate respective travelling time (shown in the axis of ordinate) from one abrupt event to the subsequent abrupt event relative to the traveling times of the automotive vehicle (shown in the axis of abscissas), which are exhibited by a safe driver, a standard driver and a dangerous or rough driver. Fig. 6D illustrates the average traveling time from one abrupt event to the subsequent abrupt event. Fig. 6E illustrates the frequency of occurrence of the current abrupt event relative to the average frequency of occurrence of the ordinary abrupt event.

By detecting an abrupt operation with the acceleration sensor 2 and then measuring the time interval between the abrupt operation and the subsequent abrupt operation, the average value thereof becomes the individual average abrupt operation occurring time. From this average abrupt operation occurring time, the driver is classified into three as shown in Figs. 6A to 6C. The safe driver, whose frequency of occurrence of the abrupt event is low as shown in Fig. 6A, exhibits the average abrupt operation occurring time, which is long, and, hence, has a little risk to a traffic accident. The standard driver, whose frequency of occurrence of the abrupt event is not high or low either, exhibits the average abrupt operation occurring time as shown in Fig. 6B, which is on an average, and, hence, has a standard risk to a traffic accident. The dangerous or rough driver, whose frequency of occurrence of the abrupt event is high as shown in Fig. 6C, exhibits the average abrupt operation occurring time, which is short, and, hence, has a high risk to a traffic accident. And, as shown in Fig. 6D, depending on the average traveling time to the abrupt event, classification can be made into three regions including a safety drive region, a standard drive region and a dangerous drive region.

Also, as shown in Fig. 6E, assuming that the above described state of the driver is a routine drive for a long period, in the event that an abrupt operation, which is abrupt as compared with his or her routine drive, occurs in a plurality of times during the recent short term, detection is made that it is a hasty behavior state. On the other hand, in the event that the abrupt operation occurs at a frequency different from that as usual, a warning is issued from the warning unit 5.

Thereby, by causing the hasty behavior state detecting unit 13 to detect the hasty state only through the detection by the acceleration sensor 2, and by displaying or warning the high possibility of an accident, the traffic incident or accident can be prevented.

The decelerating behavior state detecting unit 14 shown in Fig. 1 is operable to classify, on the basis of a time distribution of acceleration in the decelerating behavior of the drive behaviors, in which the automotive vehicle is decelerated, the decelerating behavior state into a predicated deceleration type, an anticipated circumvention type, the determination miscalculation type and an emergency deceleration type and then to evaluate the decelerating behavior. Data so acquired are stored in the memory 6 and are displayed on the display unit 4 during the traveling. This is made in the light of the fact that since with the conventional driving behavior detecting apparatus, decision is made to see whether or not it is indeed a dangerous drive by counting the number of times of occurrence of the abrupt behavior such as, for example, braking or by examining the details of preceding and subsequent images, a substantial amount of time has been encountered with.

Fig. 7 illustrates the classification of this decelerating behavior state. The predicated deceleration type is most preferred, followed by the anticipated circumvention type. In contrast thereto, the determination miscalculation type is undesirable, but the emergency deceleration type is most undesirable.

In other words, the decelerating behavior state detecting unit 15 referred to above is operable to analyze respective waveforms of the time distribution of the acceleration of the decelerating behavior so that a feature of each of the waveforms can be extracted from the position of the center of gravity of an integrated value and ups and downs of the level. The waveforms of the time distribution are integrated to calculate the surface area and, then, the position of the center of gravity thereof is determined. Data so obtained are stored in the memory 6. As shown in Fig. 7, classification is so made that when the waveform peak exceeds the standard value S0 enough to indicate a high degree of emergency with the position of the center of gravity of the waveform falling within a first half F, it is deemed as an anticipated circumvention type with predication; when the position of the center of gravity falls in the latter half R, it is deemed as a determination miscalculation type although it has a prima facie predication; and when the position of the center of gravity lies at a center, it is deemed as an emergency deceleration type. When the waveform peak is lower than the standard value S0, it means that the degree of emergency is low and has a predication and, therefore, it is classified as the predicated deceleration type.

The predicated deceleration type is such that the waveform peak is lower than the standard value S0 and that since a halting point is sufficiently predicated, the safety is highest of all types.

Since the anticipated circumvention type is such that the position of the center of gravity of the waveform lies in the first half F with the waveform peak exceeding the standard value S0 and that since the emergency deceleration of a high degree of acceleration is performed in sufficiently good time in anticipation of an event that a person may suddenly pounce out, the safety can be secured despite of the abrupt deceleration taking place. The determination miscalculation type is such that the position of the center of gravity lies in the latter half R with the waveform peak exceeding the standard value S0 and that since although predication is made in good time, determination of the halting point is in error and, therefore, a highly abrupt deceleration of a high degree of acceleration takes place at the last minute, the hazardous nature is high. The emergency deceleration type is such that the position of the center of gravity lies at the center with the waveform peak exceeding the standard value S0 and that due to an insufficient predication and delay in determination of the halting point, the abrupt deceleration of a high degree of acceleration continues a substantial length of time. This emergency deceleration type is highest in hazardous nature and a warning is issued from the warning unit 5.

Fig. 8 illustrates the flowchart showing the sequence of operation of the decelerating behavior state detecting unit 14 described hereinabove.

At the outset, acceleration data are acquired at step P1. Decision is subsequently made at step P2 to determine whether or not the behavior occurs. In the event of occurrence of the behavior, another decision is made at step P3 to determine whether or not the acceleration exceeds a threshold value, and, if it does not exceed the threshold value as determined at step P3, a further decision is made at step P4 to determine whether or not the behavior is terminated. In the event that the behavior has not yet terminated as determined at step P4, the program flow returns to step P1, but in the event that the behavior has terminated as determined at step P4, it is determined as the predicated deceleration type at step P5. On the other hand, in the event that the acceleration exceeds the threshold value as determined at step P3, decision is made at step P6 to determine whether or not the behavior has terminated and, in the event that the behavior has not yet terminated as determined at step P6, the program flow returns to step P1, but in the event that the behavior has terminated as determined at step P6, the center of gravity of time is determined from the waveform of the behavior at step P7. In the event that the center of gravity is within 0 to 30% of the duration of the behavior as determined at step P8, it is determined as the anticipated circumvention type at the subsequent step P9. On the other hand, in the event that the center of gravity is not within 0 to 30% of the duration of the behavior, but falls within 30 to 70% as determined at step P10, it is determined as the emergency deceleration type at step P11, but in the event that the center of gravity exceeds 70% as determined at step P10, it is determined as the determination miscalculation type at step P12.

Accordingly, the decelerating behavior state detecting unit 14 discussed above can classify the decelerating behavior state at full length into one of the predicated deceleration type, the anticipated circumvention type, the determination miscalculation type and the emergency deceleration type, merely through the detection by the acceleration sensor 2. Therefore, there is no need to carry out a detailed examination with reference to the preceding and subsequent images of the hazardous behavior such as hitherto required, the determination of whether is good or bad can be easily made and a proper driving guidance can be given with a simplified structure. While in the past the anticipated circumvention type having the acceleration exceeding a certain value has been considered the hazardous behavior, the detection made by the decelerating behavior state detecting unit 14 employed in the practice of the present invention is effective to determine the safety being secured.

The halting behavior state detecting unit 15 shown in Fig. 1 is operable to detect the halting behavior state on the basis of the comparison between the duration of deceleration, required to accomplish the deceleration as detected by the acceleration sensor 2, and a range of a plurality of predetermined durations of deceleration determined in dependence on deceleration starting velocities. Data so obtained are stored in the memory 6 and are displayed on the display unit 4 during such traveling. This is made in the light of the fact that the driver frequently instituting halt incident to a strong deceleration tends to exhibit a high speed and/or a short distance between two cars and is likely to result in an improper timing at which the deceleration is initiated. It is to be noted that the speed and the distance between two cars are based on general indexes.

In order to properly decelerate an arbitrary speed to a halt, the deceleration for a certain length of time is needed. The smooth deceleration and halt requires time comparable to or greater than the proper length of time. Conversely, the abrupt deceleration requires a length of time shorter than the proper time. From this frequency, the proper halting time characteristic of the driver is evaluated.

Also, by conveying the proper time thereof to the driver on a real time basis, a target is given.

By way of example, as shown in Fig. 9, the length of time B required to accomplish the smooth deceleration tends to be longer than the length of time A required to accomplish the abrupt deceleration. Also, the peak of the acceleration during the abrupt deceleration tends to be higher than the peak of the acceleration during the smooth deceleration.

As shown in Fig. 10, the goodness or badness of those proper lengths of time is classified into three stages. By way of example, with respect to the deceleration initiating speed (km/h), the duration of deceleration (sec) is calculated from the acceleration speed value so generated. A region of safety time represents a halting action in a safe time. A region of caution time represents a halting action that cannot be conscious of smoothness. A region of hazardous time represents an abrupt halting action.

In view of the above, the halting behavior state detecting unit 15 referred to previously detects the goodness or badness of the halting behavior state during the deceleration merely through the detection by the acceleration sensor 2, and, since the driver can therefore acquire during the deceleration on a real time basis, a proper length of time required to halt, a proper guidance can be given with a simplified structure. Also, classification into three or more stages makes it possible to uniformly comprehend the halting behavior state of the driver.

The leftward or rightward turning behavior state detecting unit 16 shown in Fig. 1 is operable to detect the radius of turn of the road on the basis of the acceleration from the acceleration sensor 2 and the speed of travel of the automotive vehicle A to thereby detect the leftward or rightward turning behavior state on the basis of the actual approaching speed relative to a proper approaching speed dependent on the radius of curvature of the road. Data so obtained are stored in the memory 6 and are then displayed on the display unit 4 during such driving. This is made in the light of the fact that when cornering at the intersection or a curving road, impacts will act on, for example, luggage inside the automotive vehicle and/or the automotive vehicle will be likely to turn upside down unless the automotive vehicle approaches the intersection or the curving road at a proper speed and those may result from the driver's failure to recognize the proper approaching speed. The speed of the automotive vehicle A is detected by a speed sensor (not shown) or a GPS sensor by, for example, differentiating the acceleration.

In the first place, from the acceleration of the automotive vehicle A and the speed thereof, the radius of curvature of the road and the turning angle of the automotive vehicle, which are incident to the change in course, are determined. When the vehicle speed [v (m/s), V (km/h)], the acceleration [a (m/s$^2$), G (g)] and the curving time [t (s)] are known, the radius r (m) at the moment of curving of the road can be obtained from the following equation (1):

$$r\ (m) = v^2\ (m^2/s^2)/a\ (m/s^2) = V^2\ (km^2/h^2)/(127 \text{ x } G\ (g)) \cdots\cdots\ (1)$$

The radius r (m) at the moment obtained from the equation (1) above is that for unitary time and, therefore, the entire curve R (m) is expressed by the following equation (2):

$$R\ (m) = \Sigma(\ r\ (m))/n \cdots\cdots\ (2)$$

In this equation (2) above, $\Sigma$ represents an integration of r at those moments during the curving and the average R is determined by dividing it by its time (sampling number being n).

There is a proper approaching speed for a particular radius of curvature of the road. Relative to the proper approaching speed, classification is made from the actual approaching speed into three or more stages, for example, the following four stages (a) to (d) when at the radius r in the above equation (1), a proper acceleration (0.2 g) is generated as the automotive vehicle turns at the intersection or along the curve. In a hazardous case, a warning is issued on a real time basis from the warning unit 5. Also, by acquiring from the frequency of occurrences a feature of the drive relative to the curve, it is possible to diagnose whether the leftward or rightward turn is in a risky condition at all times or whether it occurs only at the same intersection.

Fig. 11 illustrates the characteristic chart showing the relation between the approaching speed and the radius of curvature. (a) The safe approaching speed is the speed at which, in the case where approach is made to the intersection or the curve at a proper speed, a proper acceleration (0.2 g) is generated. (b) The cautious approaching speed is the speed at which, in the case where there is the possibility that no proper approaching speed is recognized, an acceleration (0.3 g) exceeding a little over the proper acceleration is generated. (c) The hazardous approaching speed is the speed at which, in the case where there is the possibility that the driving is rough and approach is made to the curve with no attention is paid to the surroundings, an acceleration (0.5 g) exceeding a substantial amount over the proper acceleration is generated. (d) The limitative approaching speed is the speed at which, in the extremely hazardous case, an acceleration (0.8 g) exceeding a sizable amount over the proper acceleration is generated.

In view of the above, the leftward or rightward turning behavior state detecting unit 16 referred to above detects the leftward or rightward turning behavior state by detecting the acceleration and speed by means of the acceleration sensor 2 and, accordingly, for each of the intersections and curves, the excess amount of the approaching speed is detected, and, therefore, the hazardous nature can be ascertained during the curving. Thus, with a simplified structure, it is possible to enhance, on a real time basis, the driver's awareness of the importance of the safe driving during the curving.

Based on the detection so obtained of the traveling behavior state, the hasty behavior state, the decelerating behavior state, the halting behavior state and/or the leftward or rightward turning behavior state, risk evaluation and assessment, including reduction and calculation, for the damage insurance may be performed. In such case, a reasonable and valid risk assessment can be performed by the accurate detection of the particular behavior of an individual driver can be appreciated.

It is to be noted that although in describing the preferred embodiment of the present invention, the control unit 8 has been shown and described as including the various detecting units 11 to 16 all in one unit, one or two or more of them can be dispensed with if so desired.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

| | |
|---|---|
| 1 | Driving behavior detecting apparatus |
| 2 | Acceleration sensor |
| 3 | Driving behavior detecting unit |
| 4 | Display unit |
| 5 | Warning unit |
| 6 | Memory |
| 7 | Electric power source unit |
| 8 | Control unit |
| 11 | Setting cant state detecting unit |
| 12 | Travelling behavior state detecting unit |
| 13 | Hasty behavior state detecting unit |
| 14 | Decelerating behavior state detecting unit |
| 15 | Halting behavior state detecting unit |
| 16 | Leftward or rightward turning behavior detecting unit |
| A | Automotive vehicle |
| O | Anteroposterior axis of the automotive vehicle |
| O1 | Anteroposterior axis of the driving behavior detecting apparatus |

## Claims

**1.** A driving behavior detecting method including a driving behavior detecting unit, mounted on an automotive vehicle and having at least an acceleration sensor, for detecting a driving behavior on the basis of an acceleration of the automotive vehicle detected by the acceleration sensor, in which:

on the basis of the frequency of occurrence of the acceleration at a plurality of angles of inclination on a plane containing a predetermined axis of the automotive vehicle and a predetermined axis of the driving behavior detecting unit installed so as to incline relative to this predetermined axis, at least the angle of inclination of an anteroposterior axis of the driving behavior detecting unit installed relative to the anteroposterior axis of the automotive vehicle is automatically detected.

**2.** The driving behavior detecting method as claimed in claim 1, in which by detecting the direction of advance of the automotive vehicle a number of times by means of the acceleration sensor, the direction of advance of the automotive vehicle is automatically detected on the basis of the detection angle of the driving behavior detecting unit and the number of times the detection has been made.

**3.** A driving behavior detecting method including a driving behavior detecting unit, mounted on an automotive vehicle and having at least an acceleration sensor, for detecting a driving behavior on the basis of an acceleration of the automotive vehicle detected by the acceleration sensor, in which:

on the basis of the magnitude of a vibrating state, detected by the acceleration sensor, and the magnitude of a vibrating state before and after a braking operation, a driving behavior state of halt, deceleration, advance and acceleration of the automotive vehicle is detected.

**4.** The driving behavior detecting method as claimed in claim 3, in which the halt of the automotive vehicle is detected when the vibrating state continues at a value lower than a predetermined value or when a low vibrating state establishes after the braking operation from a high vibrating state.

**5.** A driving behavior detecting method including a driving behavior detecting unit, mounted on an automotive vehicle and having at least an acceleration sensor, for detecting a driving behavior on the basis of an acceleration of the automotive vehicle detected by the acceleration sensor, in which:

the interval of time of occurrence of an abrupt operation detected by the acceleration sensor is measured, and on the basis of the abrupt operation occurring time interval so detected, a hasty behavior state is detected from the amount of change in a difference between an average abrupt operation occurring time interval for a long term and an average abrupt operation occurring time interval for a recent short term.

**6.** A driving behavior detecting method including a driving behavior detecting unit, mounted on an automotive vehicle and having at least an acceleration sensor, for detecting a driving behavior on the basis of an acceleration of the automotive vehicle detected by the acceleration sensor, in which:

on the basis of a time distribution of acceleration in a decelerating behavior, which is one of the driving behaviors and by which the automotive vehicle is decelerated, the decelerating behavior state is detected as classified into a predicated deceleration type, an anticipated circumvention type, a determination miscalculation type and an emergency deceleration type in dependence on the presence or absence of a predication or the degree of emergency.

**7.** The driving behavior detecting method as claimed in claim 6, in which:

the decelerating behavior is detected as so classified by extracting a feature of each waveform representing the time distribution of the acceleration from an acceleration value and a position of the center of gravity of the waveform in the waveform.

**8.** A driving behavior detecting method including a driving behavior detecting unit, mounted on an automotive vehicle and having at least an acceleration sensor, for detecting a driving behavior on the basis of an acceleration of the automotive vehicle detected by the acceleration sensor, in which:

on the basis of the comparison between a deceleration time required during the deceleration detected by the acceleration sensor and a plurality of deceleration time range preset in dependence on the deceleration initiating speed, a halting behavior is detected.

**9.** A driving behavior detecting method including a driving behavior detecting unit, mounted on an automotive vehicle and having at least an acceleration sensor, for detecting a driving behavior on the basis of an acceleration of the automotive vehicle detected by the acceleration sensor, in which:

the radius of curvature of a road is detected on the basis of the acceleration from the acceleration sensor and the speed of the automotive vehicle and a leftward or rightward turning behavior state is detected on the basis of an actual approaching speed relative to a proper approaching speed dependent on the radius of curvature of the road.

**10.** The driving behavior detecting method as claimed in any one of claims 3 to 9, in which:

on the basis of detection of the traveling behavior state, the hasty behavior state, the decelerating behavior state, the halting behavior state and/or the leftward or rightward turning behavior state so obtained, risk evaluation and assessment, including reduction and calculation, for a damage insurance are carried out.

**11.** A driving behavior detecting apparatus comprising a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which:

the control unit comprises a setting cant state detecting unit for automatically detecting, on the basis of the frequency of occurrence of the acceleration at a plurality of angles of inclination on a plane containing a predetermined axis of the automotive vehicle and a predetermined axis of the driving behavior detecting unit installed so as to incline relative to this predetermined axis, at least the angle of inclination of an anteroposterior axis of the driving behavior detecting unit installed relative to the anteroposterior axis of the automotive vehicle.

**12.** The driving behavior detecting apparatus as claimed in claim 11, in which the setting cant state detecting unit automatically detects the direction of advance of the automotive vehicle on the basis of the detection angle of the driving behavior detecting unit and the number of times the detection has been made by the acceleration sensor, by detecting the direction of advance of the automotive vehicle the number of times by means of the acceleration sensor

**13.** A driving behavior detecting apparatus comprising a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which:

the control unit comprises a traveling behavior state detecting unit for detecting a driving behavior state of halt, deceleration, advance and acceleration of the automotive vehicle is detected, on the basis of the magnitude of a vibrating state, detected by the acceleration sensor, and the magnitude of a vibrating state before and after a braking operation.

**14.** The driving behavior detecting apparatus as claimed in claim 13, in which:

the traveling behavior state detecting unit detects the halt of the automotive vehicle when the vibrating state continues at a value lower than a predetermined value or when a low vibrating state establishes after the braking operation from a high vibrating state.

**15.** A driving behavior detecting apparatus comprising a driving behavior detecting unit, which is mounted on an automotive vehicle and includes an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which:

the control unit comprises a hasty behavior state detecting unit for measuring the interval of time of occurrence of an abrupt operation, detected by the acceleration sensor, and on the basis of the abrupt operation occurring time interval so detected, for detecting a hasty behavior state from the amount of change in a difference between an average abrupt operation occurring time interval for a long term and an average abrupt operation occurring time interval for a recent short term.

**16.** A driving behavior detecting apparatus comprising a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which:

the control unit comprises a decelerating behavior state detecting unit for detecting, on the basis of a time distribution of acceleration in a decelerating behavior, which is one of the driving behaviors and by which the automotive vehicle is decelerated, the decelerating behavior state as classified into a predicated deceleration type, an anticipated circumvention type, a determination miscalculation type and an emergency deceleration type in dependence on the presence or absence of a predication or the degree of emergency.

**17.** The driving behavior detecting apparatus as claimed in claim 16, in which:

the decelerating behavior state detecting unit detects the decelerating behavior, as so classified, by extracting a feature of each waveform representing the time distribution of the acceleration from an acceleration value and a position of the center of gravity of the waveform in the waveform.

**18.** A driving behavior detecting apparatus comprising a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which:

the control unit comprises a halting behavior state detecting unit for detecting a halting behavior state on the basis of the comparison between a deceleration time required during the deceleration detected by the acceleration sensor and a plurality of deceleration time range preset in dependence on the deceleration initiating speed.

**19.** A driving behavior detecting apparatus comprising a driving behavior detecting unit, which is mounted on an automotive vehicle and including an acceleration sensor for detecting at least an acceleration of the automotive vehicle; a display unit; an electric power source unit; and a control unit for detecting the driving behavior on the basis of the acceleration of the automotive vehicle detected by the acceleration sensor, in which:

the control unit comprises a leftward or rightward turning behavior state detecting unit for detecting the radius of curvature of a road on the basis of the acceleration from the acceleration sensor and the speed of the automotive vehicle and for detecting a leftward or rightward turning behavior state on the basis of an actual approaching speed relative to a proper approaching speed dependent on the radius of curvature of the road.

**20.** The driving behavior detecting apparatus as claimed in any one of claims 13 to 19, in which:

on the basis of detection of the traveling behavior state, the hasty behavior state, the decelerating behavior state, the halting behavior state and/or the leftward or rightward turning behavior state so obtained, risk evaluation and assessment, including reduction and calculation, for a damage insurance are carried out.

Fig. 1

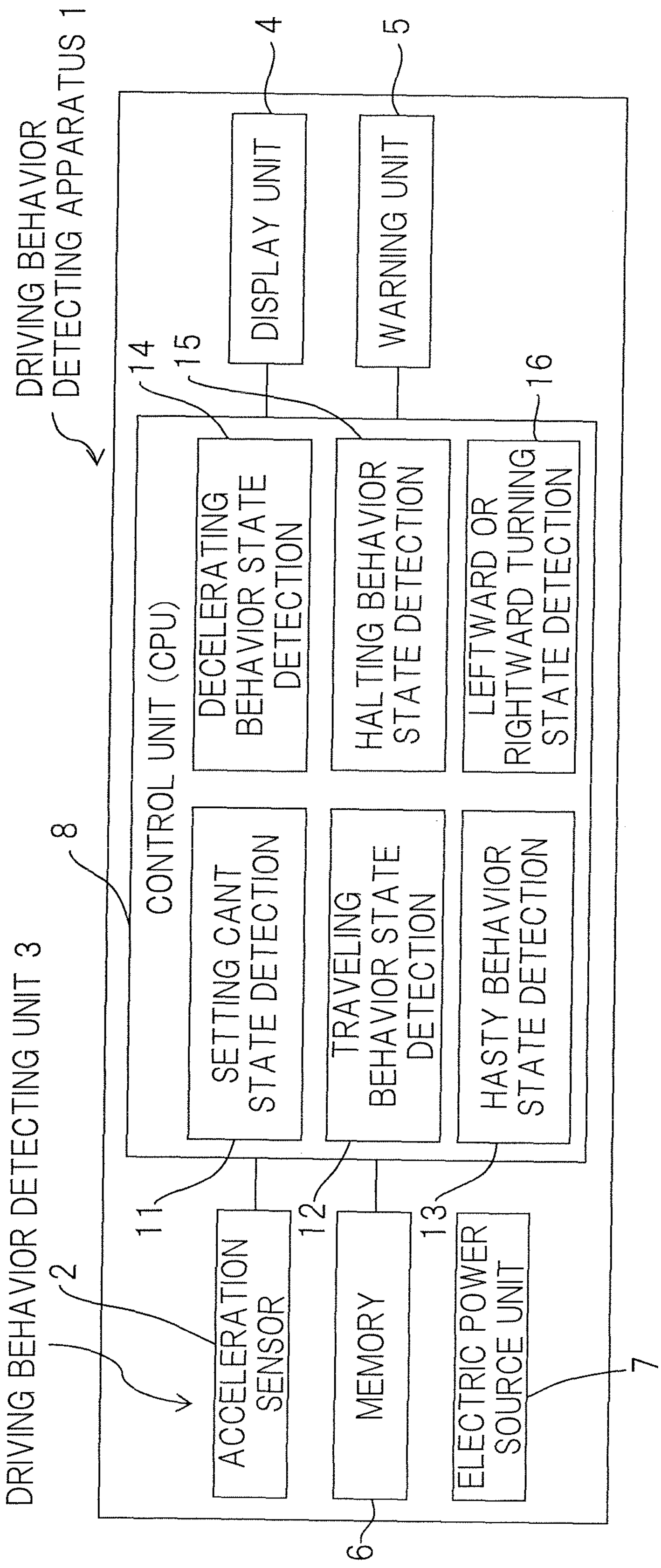
DRIVING BEHAVIOR DETECTING APPARATUS 1
DRIVING BEHAVIOR DETECTING UNIT 3
2
ACCELERATION SENSOR
MEMORY
6
ELECTRIC POWER SOURCE UNIT
7
11
12
13
8
CONTROL UNIT (CPU)
SETTING CANT STATE DETECTION
TRAVELING BEHAVIOR STATE DETECTION
HASTY BEHAVIOR STATE DETECTION
DECELERATING BEHAVIOR STATE DETECTION
HALTING BEHAVIOR STATE DETECTION
LEFTWARD OR RIGHTWARD TURNING STATE DETECTION
14
15
16
DISPLAY UNIT
4
WARNING UNIT
5

Fig. 2

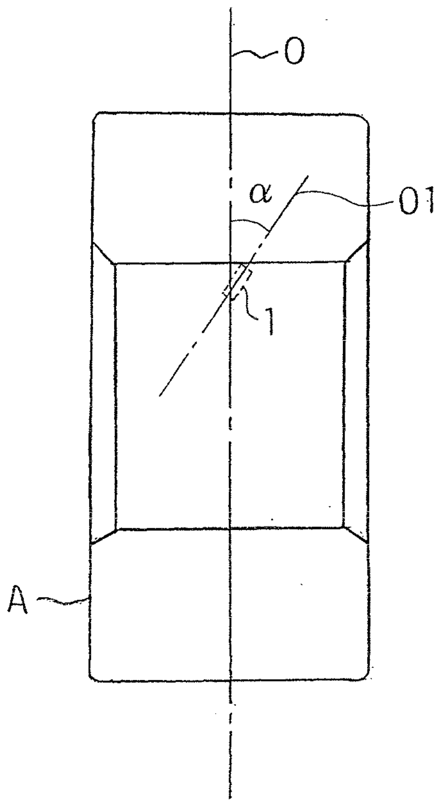

Fig. 3

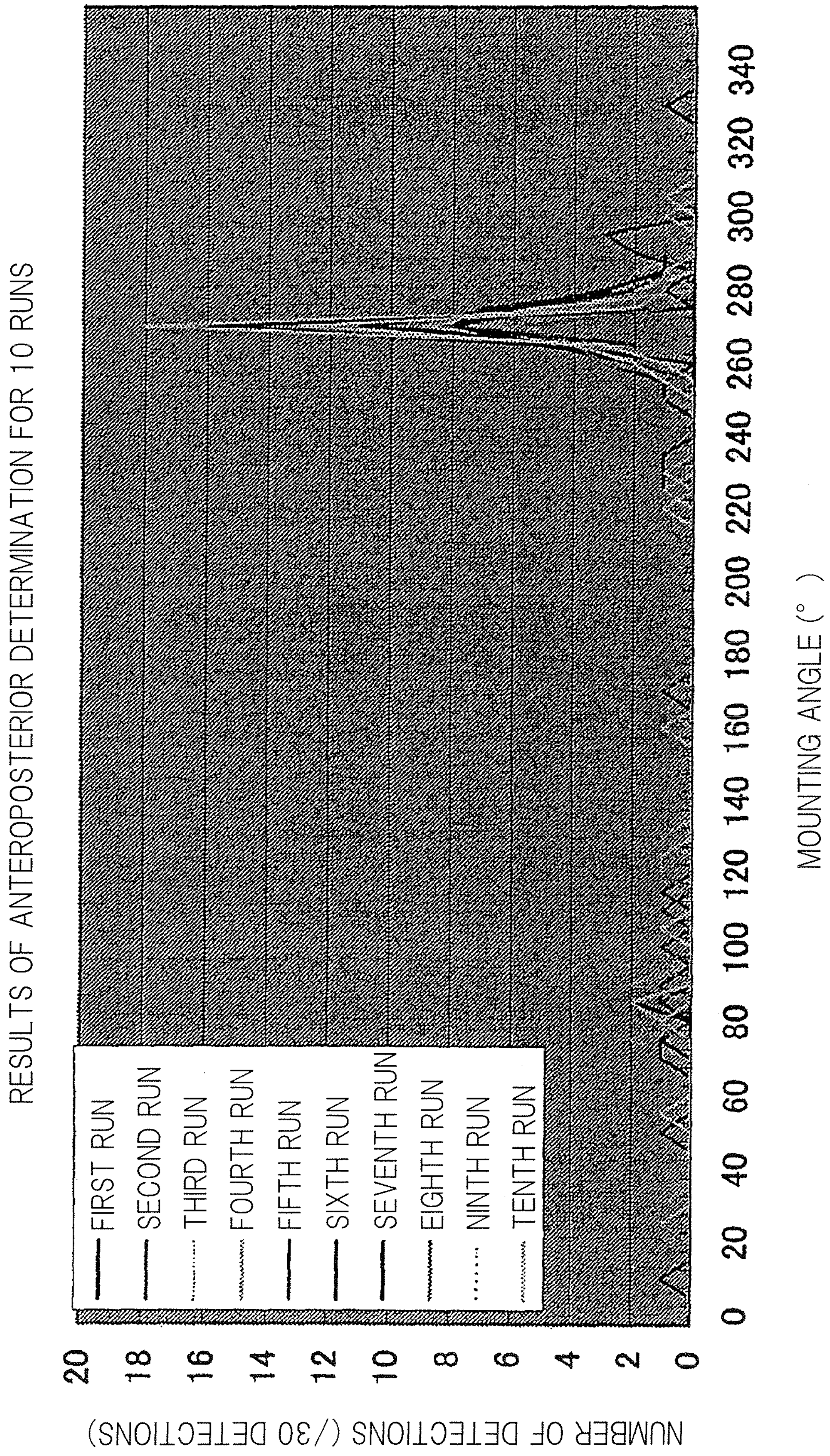
RESULTS OF ANTEROPOSTERIOR DETERMINATION FOR 10 RUNS
FIRST RUN
SECOND RUN
THIRD RUN
FOURTH RUN
FIFTH RUN
SIXTH RUN
SEVENTH RUN
EIGHTH RUN
NINTH RUN
TENTH RUN
NUMBER OF DETECTIONS (/30 DETECTIONS)
0
2
4
6
8
10
12
14
16
18
20
MOUNTING ANGLE (° )
0
20
40
60
80
100
120
140
160
180
200
220
240
260
280
300
320
340

Fig. 4A

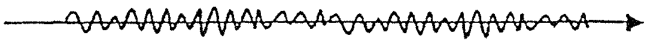


Fig. 4B

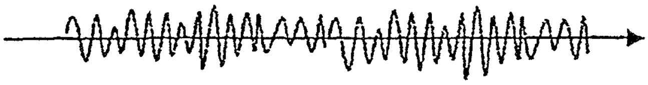


Fig. 4C

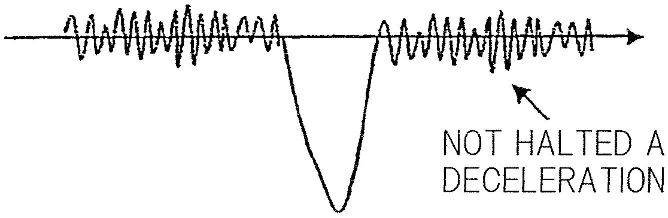


Fig. 4D

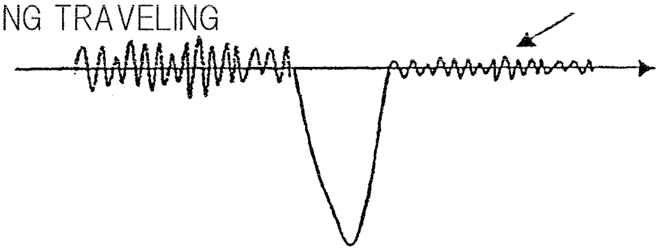


Fig. 4E

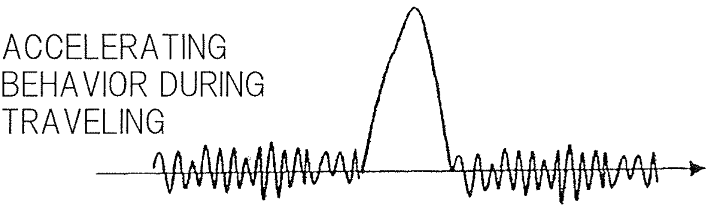


Fig. 4F

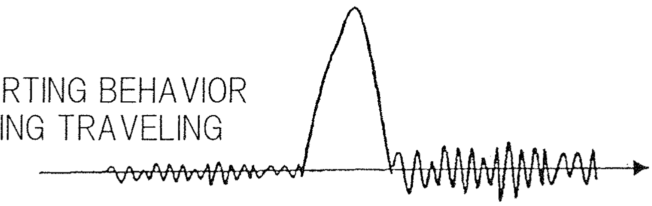

Fig. 5

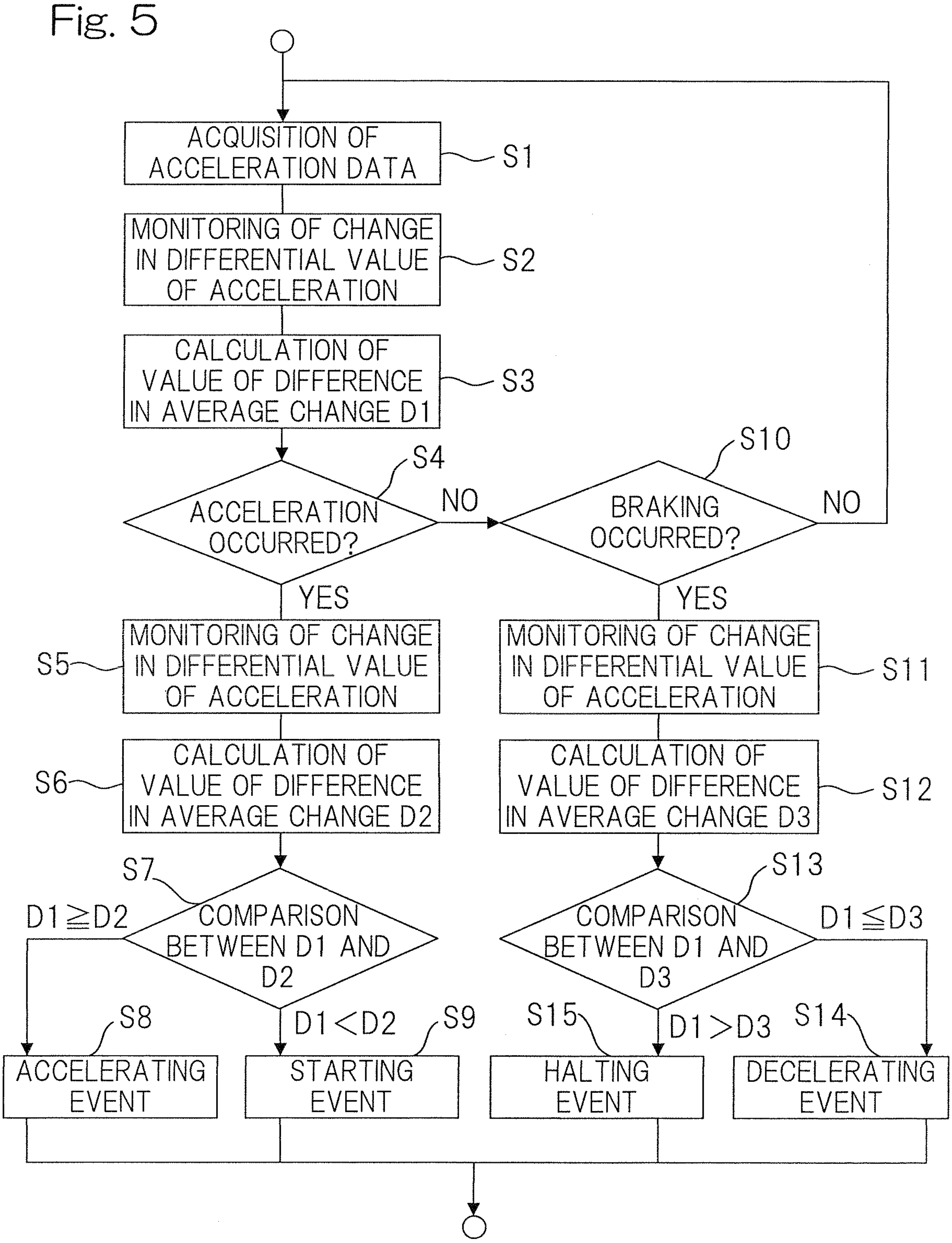
ACQUISITION OF ACCELERATION DATA
S1
MONITORING OF CHANGE IN DIFFERENTIAL VALUE OF ACCELERATION
S2
CALCULATION OF VALUE OF DIFFERENCE IN AVERAGE CHANGE D1
S3
S4
ACCELERATION OCCURRED?
NO
YES
S10
BRAKING OCCURRED?
NO
YES
S5
MONITORING OF CHANGE IN DIFFERENTIAL VALUE OF ACCELERATION
S6
CALCULATION OF VALUE OF DIFFERENCE IN AVERAGE CHANGE D2
MONITORING OF CHANGE IN DIFFERENTIAL VALUE OF ACCELERATION
S11
CALCULATION OF VALUE OF DIFFERENCE IN AVERAGE CHANGE D3
S12
S7
D1≧D2
COMPARISON BETWEEN D1 AND D2
D1<D2
S13
COMPARISON BETWEEN D1 AND D3
D1≦D3
D1>D3
S8
ACCELERATING EVENT
S9
STARTING EVENT
S15
HALTING EVENT
S14
DECELERATING EVENT

Fig. 6A

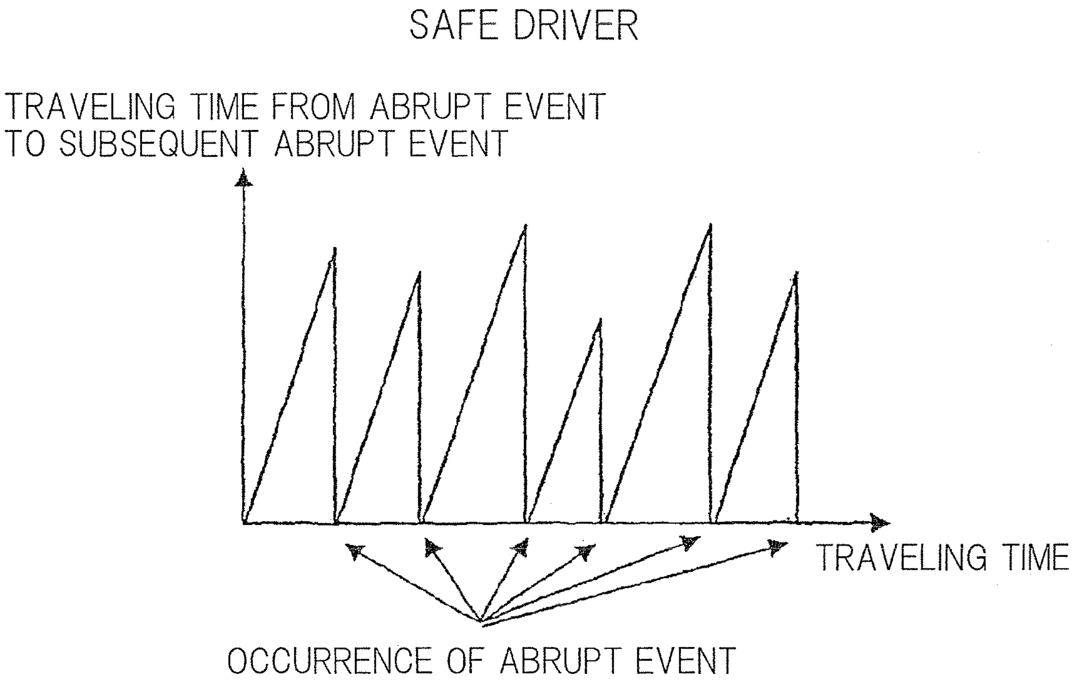
SAFE DRIVER
TRAVELING TIME FROM ABRUPT EVENT
TO SUBSEQUENT ABRUPT EVENT
TRAVELING TIME
OCCURRENCE OF ABRUPT EVENT

Fig. 6B

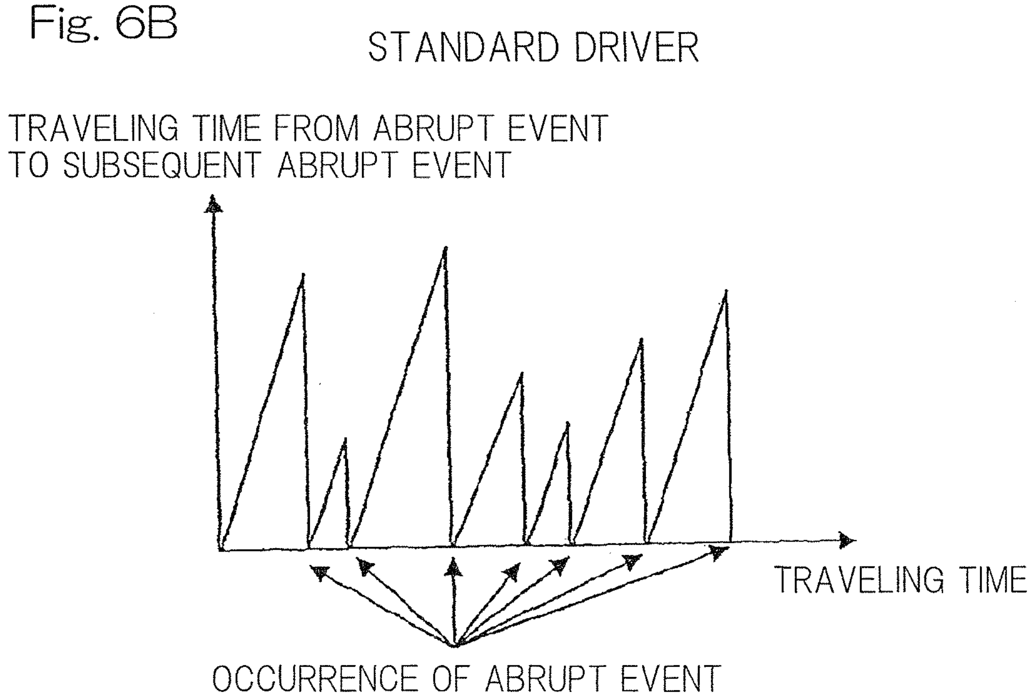
STANDARD DRIVER
TRAVELING TIME FROM ABRUPT EVENT
TO SUBSEQUENT ABRUPT EVENT
TRAVELING TIME
OCCURRENCE OF ABRUPT EVENT

Fig. 6C

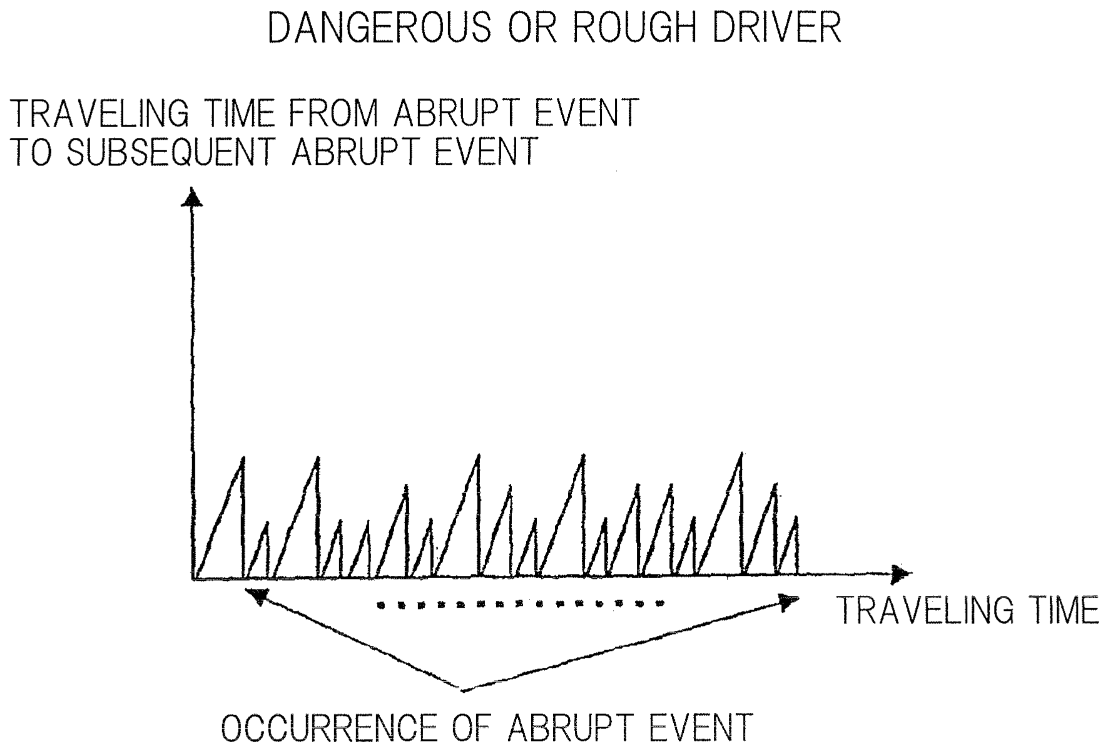
DANGEROUS OR ROUGH DRIVER
TRAVELING TIME FROM ABRUPT EVENT
TO SUBSEQUENT ABRUPT EVENT
TRAVELING TIME
OCCURRENCE OF ABRUPT EVENT

Fig. 6D

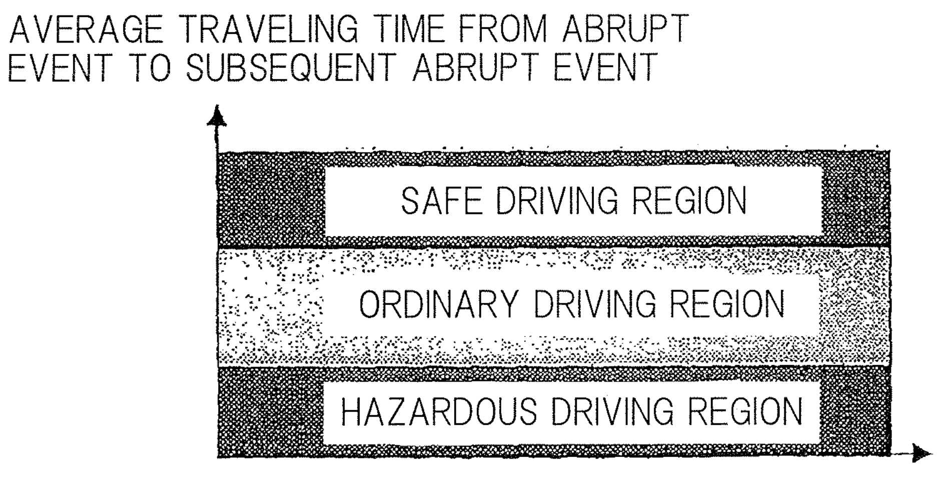
AVERAGE TRAVELING TIME FROM ABRUPT
EVENT TO SUBSEQUENT ABRUPT EVENT
SAFE DRIVING REGION
ORDINARY DRIVING REGION
HAZARDOUS DRIVING REGION

Fig. 6E

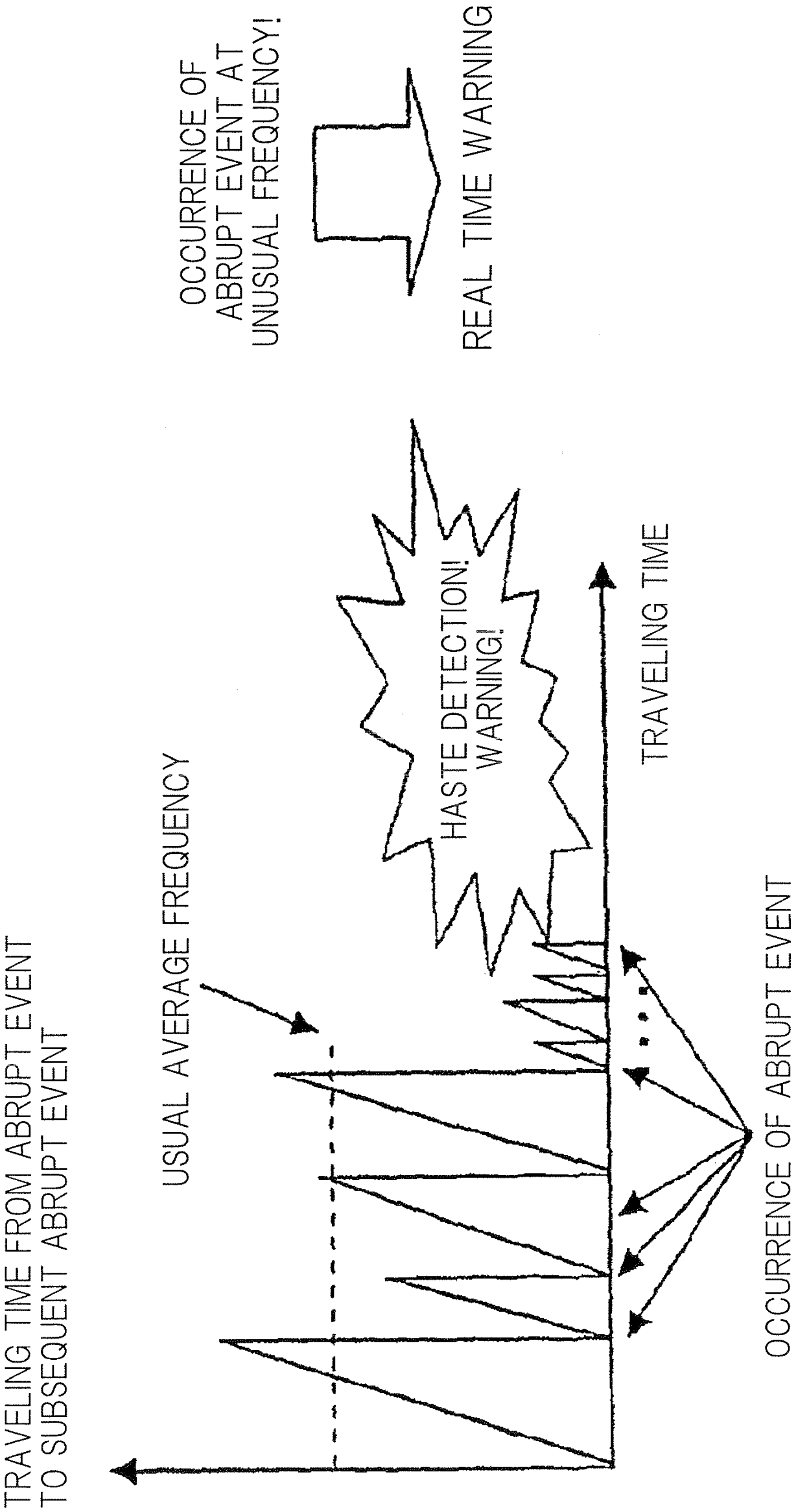
TRAVELING TIME FROM ABRUPT EVENT
TO SUBSEQUENT ABRUPT EVENT
USUAL AVERAGE FREQUENCY
HASTE DETECTION!
WARNING!
TRAVELING TIME
OCCURRENCE OF ABRUPT EVENT
OCCURRENCE OF
ABRUPT EVENT AT
UNUSUAL FREQUENCY!
REAL TIME WARNING

Fig. 7

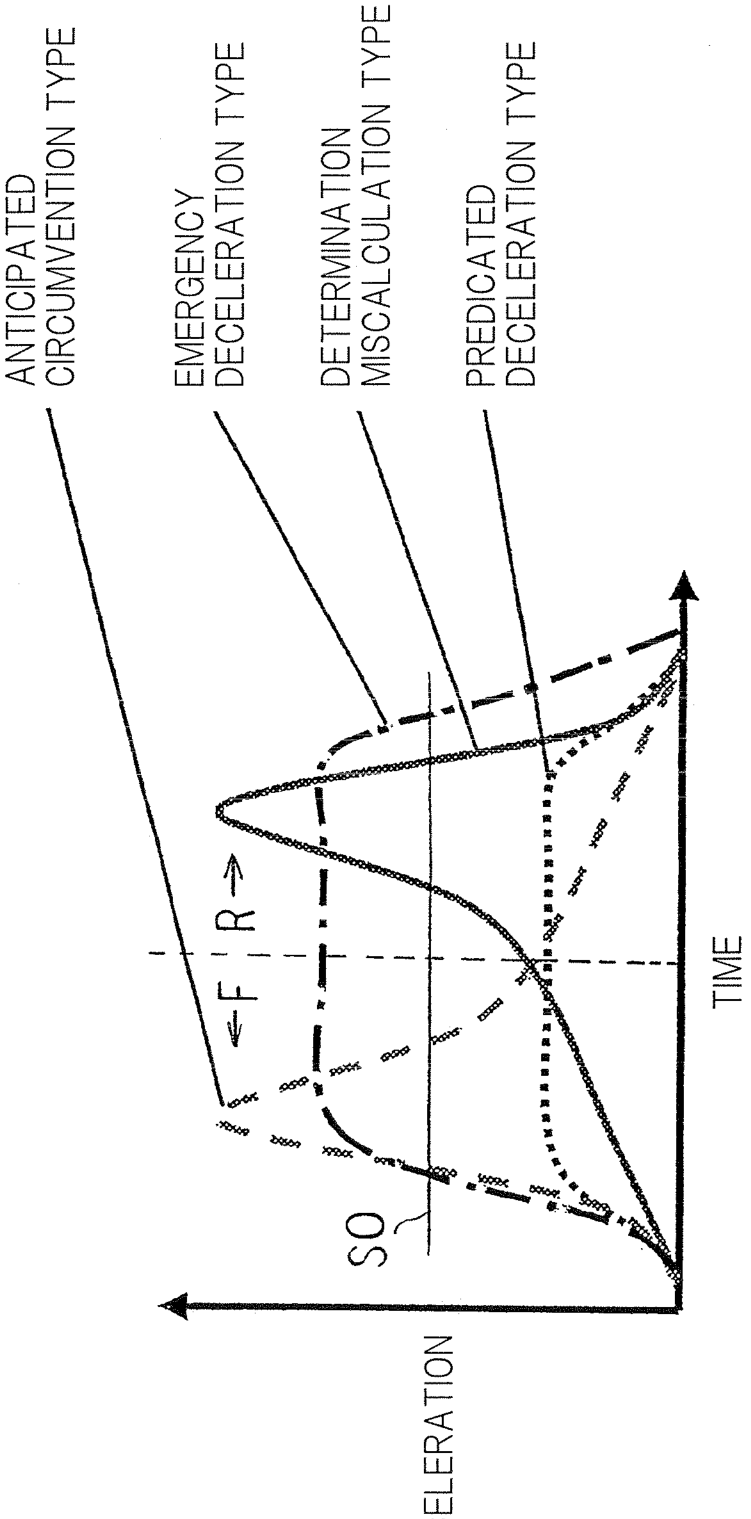
ANTICIPATED CIRCUMVENTION TYPE
EMERGENCY DECELERATION TYPE
DETERMINATION MISCALCULATION TYPE
PREDICATED DECELERATION TYPE
←F R→
SO
ACCELERATION
TIME

Fig. 8

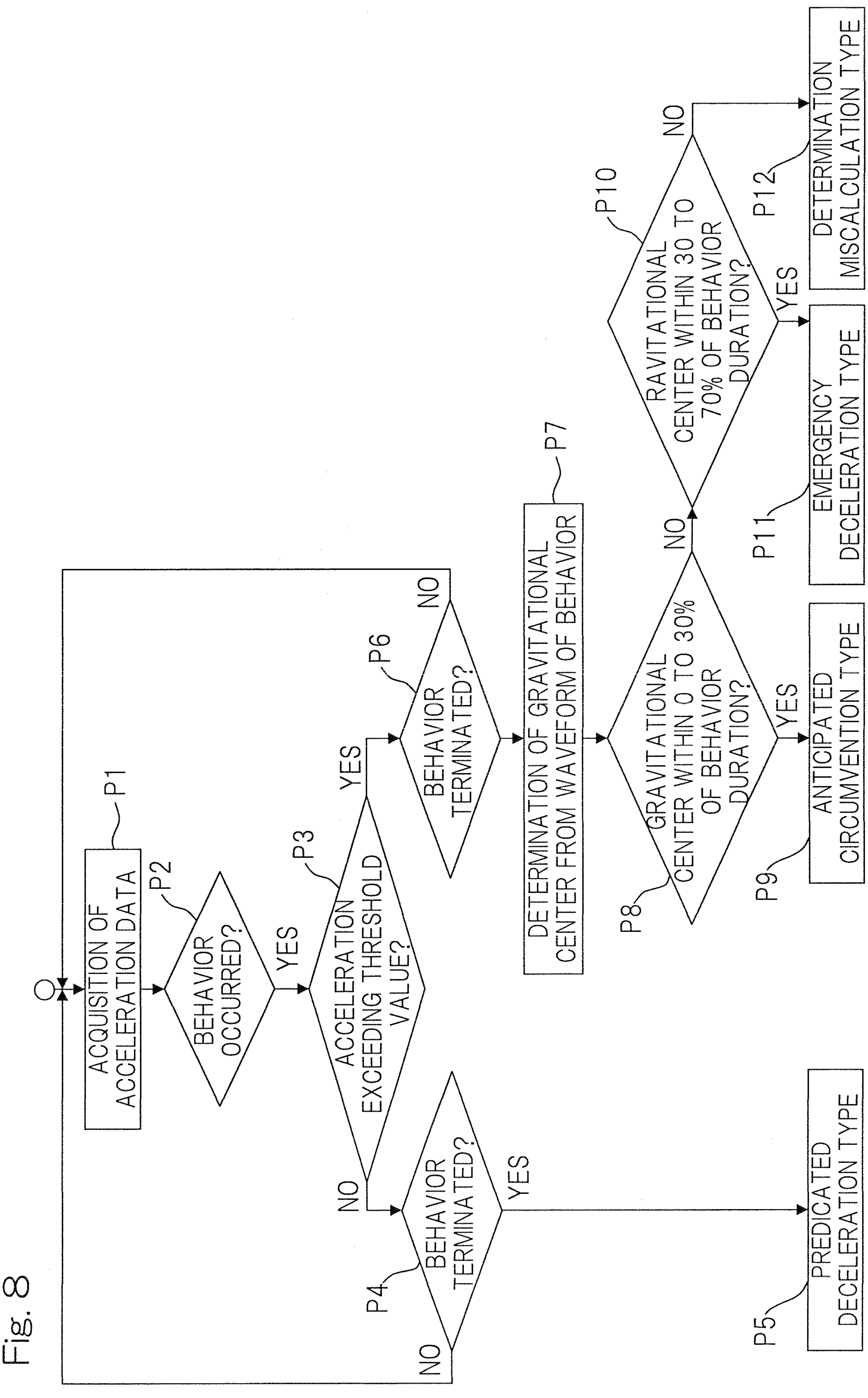

P1
ACQUISITION OF ACCELERATION DATA
P2
BEHAVIOR OCCURRED?
YES
P3
ACCELERATION EXCEEDING THRESHOLD VALUE?
NO
P4
BEHAVIOR TERMINATED?
YES
NO
P5
PREDICATED DECELERATION TYPE
YES
P6
BEHAVIOR TERMINATED?
NO
P7
DETEMINATION OF GRAVITATIONAL CENTER FROM WAVEFORM OF BEHAVIOR
P8
GRAVITATIONAL CENTER WITHIN 0 TO 30% OF BEHAVIOR DURATION?
YES
P9
ANTICIPATED CIRCUMVENTION TYPE
NO
P10
RAVITATIONAL CENTER WITHIN 30 TO 70% OF BEHAVIOR DURATION?
YES
P11
EMERGENCY DECELERATION TYPE
NO
P12
DETERMINATION MISCALCULATION TYPE

Fig. 9

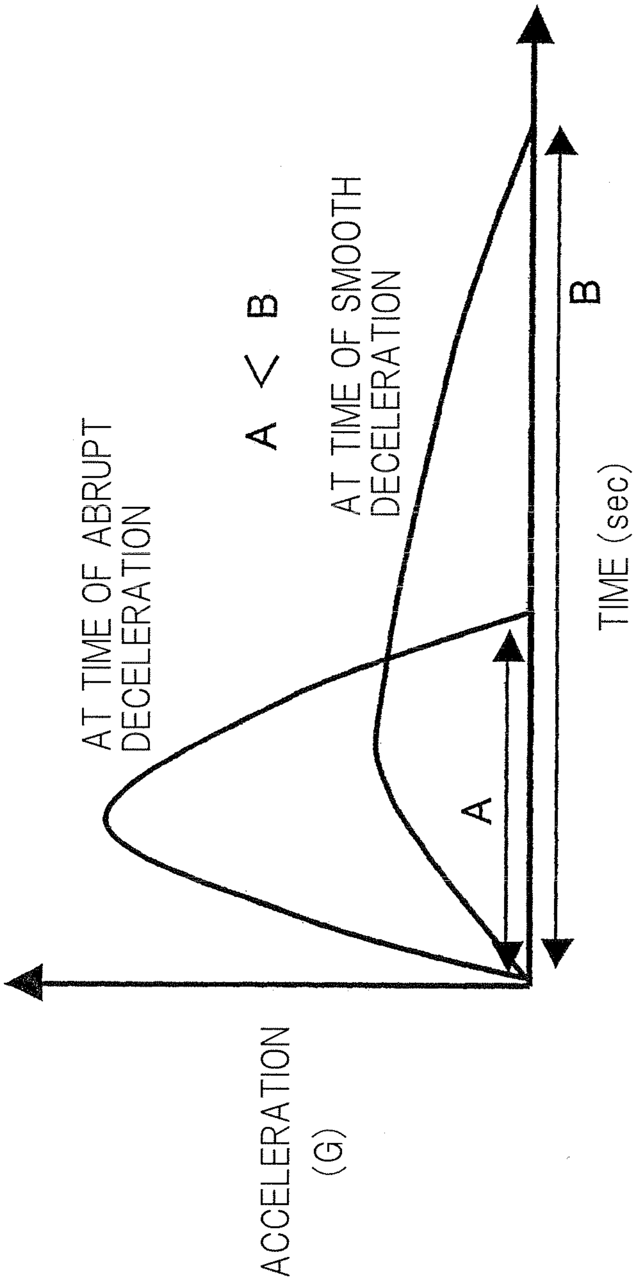
ACCELERATION (G)
AT TIME OF ABRUPT DECELERATION
A < B
AT TIME OF SMOOTH DECELERATION
A
B
TIME (sec)

Fig. 10

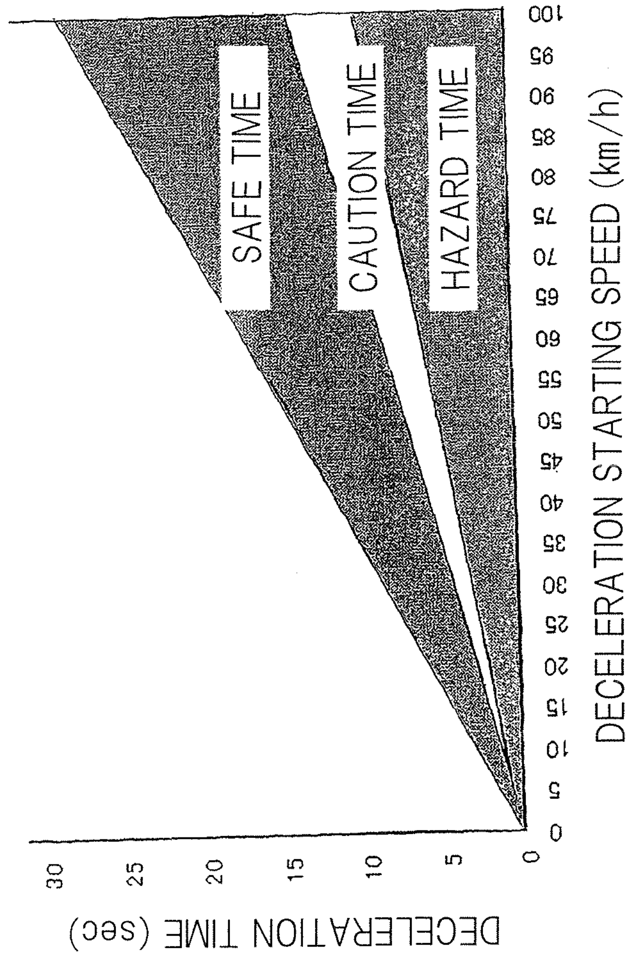
SAFE TIME
CAUTION TIME
HAZARD TIME
DECELERATION TIME (sec)
0 5 10 15 20 25 30
DECELERATION STARTING SPEED (km/h)
0 5 10 15 20 25 30 35 40 45 50 55 60 65 70 75 80 85 90 95 100

Fig. 11

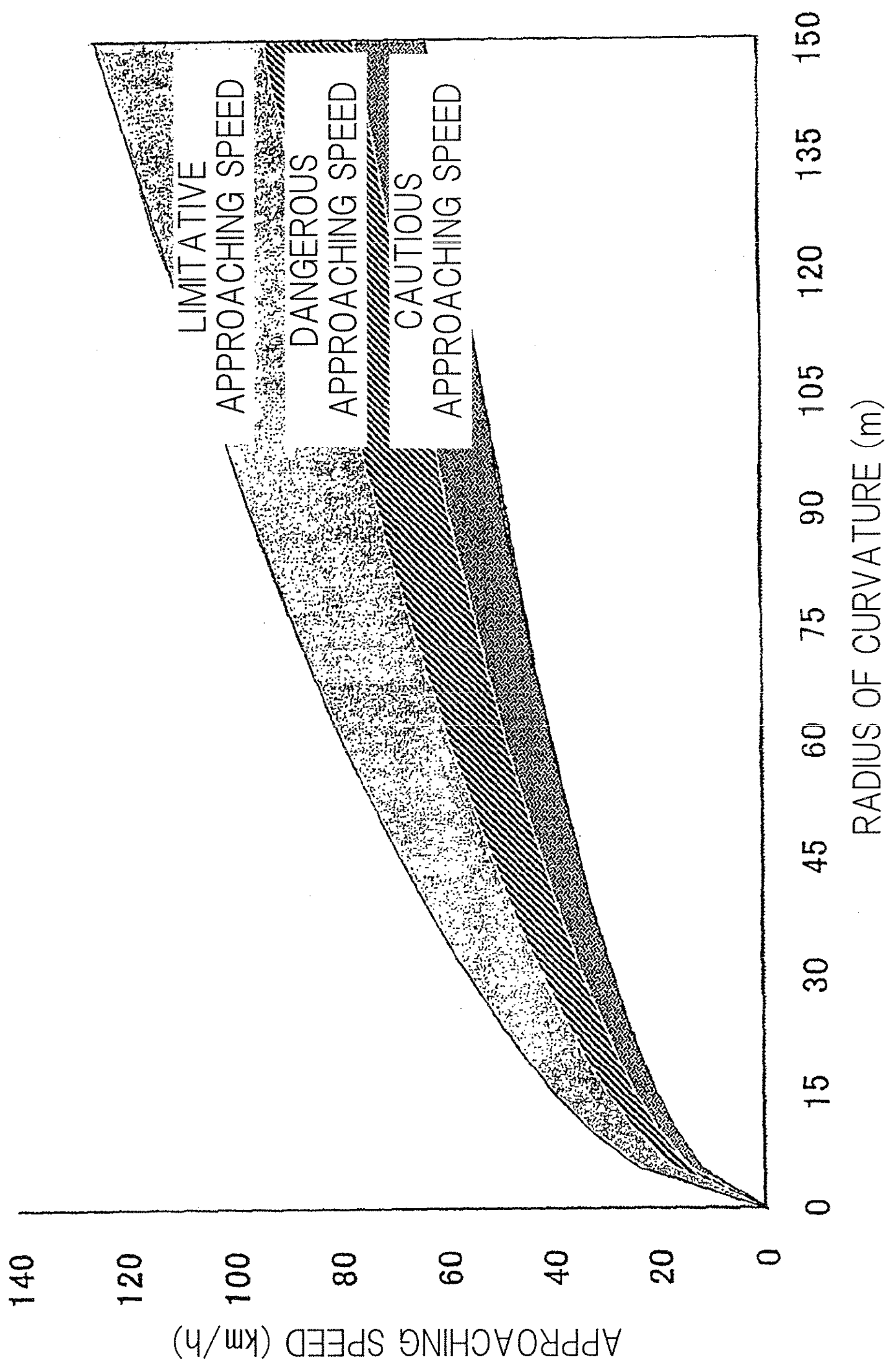
LIMITATIVE APPROACHING SPEED
DANGEROUS APPROACHING SPEED
CAUTIOUS APPROACHING SPEED
APPROACHING SPEED (km/h)
0
20
40
60
80
100
120
140
RADIUS OF CURVATURE (m)
0
15
30
45
60
75
90
105
120
135
150

## INTERNATIONAL SEARCH REPORT

International application No.
PCT/JP2010/072352

A. CLASSIFICATION OF SUBJECT MATTER
*G08G1/00*(2006.01)i, *B60K28/10*(2006.01)i, *G07C5/00*(2006.01)i, *G08G1/16*(2006.01)i

According to International Patent Classification (IPC) or to both national classification and IPC

B. FIELDS SEARCHED

Minimum documentation searched (classification system followed by classification symbols)
G08G1/00, B60K28/10, G07C5/00, G08G1/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-117423 A (Omron Corp.), 22 May 2008 (22.05.2008), paragraphs [0007] to [0010], [0135], [0136] (Family: none) | 1,2,11,12 |
| Y | JP 2008-151655 A (The Yokohama Rubber Co., Ltd.), 03 July 2008 (03.07.2008), paragraphs [0005] to [0008], [0046] to [0056] (Family: none) | 1,2,11,12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 February, 2011 (21.02.11) | 01 March, 2011 (01.03.11) |
| Name and mailing address of the ISA/ Japanese Patent Office | Authorized officer |
| Facsimile No. | Telephone No. |

Form PCT/ISA/210 (second sheet) (July 2009)

INTERNATIONAL SEARCH REPORT

International application No.
PCT/JP2010/072352

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention of claim 1, the invention of claims 3-10, and the invention of claims 13-20 individually have a common technical feature of "comprising a driving behavior detecting section mounted on a vehicle and having at least an acceleration sensor, for detecting a driving behavior on the basis of the vehicular acceleration detected by the acceleration sensor". In view of the disclosed contents of JP 2008-117423 A (Omron Corp.), 22 May 2008 (22.05.2008), paragraph [0007] - paragraph [0010], paragraph [0135] and paragraph [0136], however, said technical feature makes no contribution to the prior art so that said technical feature cannot be any special technical feature. (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
Claims 1, 2, 11 and 12.

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.
PCT/JP2010/072352

Continuation of Box No.III of continuation of first sheet(2)

Among these inventions, moreover, there is no other same or corresponding special technical feature. Hence, it is apparent that the inventions of claims 1-20 do not comply with the requirement of unity of invention.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009281245 A
- JP 3044025 B
- JP 3229297 B